# EUROPÄISCHE PATENTANMELDUNG

(11) **EP 0 653 627 A1**
(43) Veröffentlichungstag der Anmeldung: **17.05.1995**
(21) Anmeldenummer: 94113052.8
(22) Anmeldetag: 22.08.1994
(51) Int. Cl.: G01N 21/90

(54) **Verfahren zum Ausscheiden von Mehrwegflaschen aus dem Mehrwegumlauf**

(30) Priorität: 12.10.1993 CH 3062/93
(71) Anmelder: ELPATRONIC AG, CH-6303 Zug (CH)
(72) Erfinder: Alvarez, Fernando, NL-5415 Rieden b. Nussbaumen (CH); Pirani, Peter, CH-8624 Grüt (Gossau ZH) (CH); Gernet, Pierre, CH-5400 Ennetbaden (CH); Jungo, Daniel, CH-8116 Würenlos (CH)

(57) **Zusammenfassung**

Zur Erkennung von Rissen (stress cracks) im Boden (2) von PET-Flaschen (1) wird der Boden mit Licht beaufschlagt. Durch einen Photosensor (15) der unter einen Winkel zur Lichteinfallsrichtung angebracht ist wird das an der Risszone gestreute Licht gemessen. Der Messwert erlaubt eine gute Beurteilung, ob die Menge und Tiefe der Risse ein Ausscheiden der Flasche aus dem Mehrweg-Umlauf nötig macht.

## Beschreibung

Die Erfindung betrifft ein Verfahren zum Ausscheiden von Mehrwegflaschen, insbesondere Kunststoff-Mehrwegflaschen, aus dem Mehrweg-Umlauf. Ferner betrifft die Erfindung eine Vorrichtung zur Durchführung des Verfahrens.

Insbesondere bei Kunststoff-Mehrwegflaschen, z.B. bei PET-Flaschen, welche eine begrenzte Lebensdauer haben, stellt sich das Problem, dass diejenigen Flaschen, deren Lebensdauer sich infolge sogenannter "stress-cracks" dem Ende zu neigt, rechtzeitig aus dem Mehrweg-Umlauf entfernt werden sollten. Dies nicht nur aus optischen und hygienischen Gründen, sondern auch, um beim Konsumenten einen Bruch oder ein Reissen der Flaschen zu verhindern, sowie um in der Abfüllanlage beim jeweiligen erneuten Befüllen der Flasche, bei welchem die jeweilige Flasche mit relativ hohem Druck beaufschlagt wird, ein Reissen oder Platzen der Flasche zu vermeiden. Die als stress cracks bezeichneten Risse entstehen während der Lebensdauer der Flasche insbesondere durch deren Reinigung und deren Förderung. Die Häufigkeit und die Tiefe der Risse nehmen dabei während des Flaschenlebens zu und die Lebensdauer der Flasche wird im wesentlichen durch die Risse bestimmt. Bisher ist es nicht gelungen, diese üblichen Ermüdungsschäden solcher Flaschen, welche sich insbesondere in der Form von feinen, mehr oder weniger tiefen radialen und azimutalen Rissen im Bodenbereich der Flaschen darstellen, in einer solchen Weise zu erfassen, dass das Ende der Lebensdauer der Flasche sicher erkannt werden kann.

Es stellt sich daher die Aufgabe, eine Möglichkeit zu schaffen, dass Flaschen rechtzeitig vor deren Lebensdauer-Ende aus dem Mehrweg-Umlauf ausgeschieden werden können, ohne dass deshalb die Flaschen wesentlich zu früh aus dem Mehrweg-Umlauf entnommen werden.

Diese Aufgabe wird gemäss der Erfindung dadurch gelöst, dass Licht auf mindestens einen Abschnitt des Flaschenbodens jeweils einer Flasche gerichtet wird und dass vom Flaschenbodenabschnitt abgegebenes Licht von einem lichtempfindlichen Empfänger aufgenommen und in eine dem empfangenen Licht entsprechendes elektrisches Signal umgesetzt wird, welches Signal ausgewertet wird, um die Flasche aus dem Mehrweg-Umlauf auszuscheiden oder in diesem zu belassen.

Es hat sich gezeigt, dass durch Beleuchtung des Flaschenbodens im wesentlichen in der stress crack-Zone und Messung des gestreuten und/oder reflektierten Lichtes eine sehr gute Ermittlung des Beschädigungsgrades der Flasche erzielt werden kann. Der Messwert beinhaltet dabei sowohl die Menge als auch die Tiefe der Risse und ist daher sehr aussagekräftig für die Entscheidung, ob eine Flasche noch im Mehrweg-Umlauf belassen werden kann, oder ob die Flasche aus dem Umlauf entfernt werden muss.

Im folgenden werden Ausführungsbeispiele der Erfindung anhand der Figuren näher erläutert. Dabei zeigt
Figur 1 grob schematisch eine erste Anordnung zur Durchführung des Verfahrens;
Figur 2 eine weitere Anordnung zur Durchführung des Verfahrens;
Figur 3 eine dritte Anordnung zur Durchführung des Verfahrens;
Figur 4 eine der ersten Anordnung entsprechende Anordnung in genauerer Darstellung; und
Figur 5 eine weitere grob schemtisch dargestellte Anordnung zur Durchführung des Verfahrens.

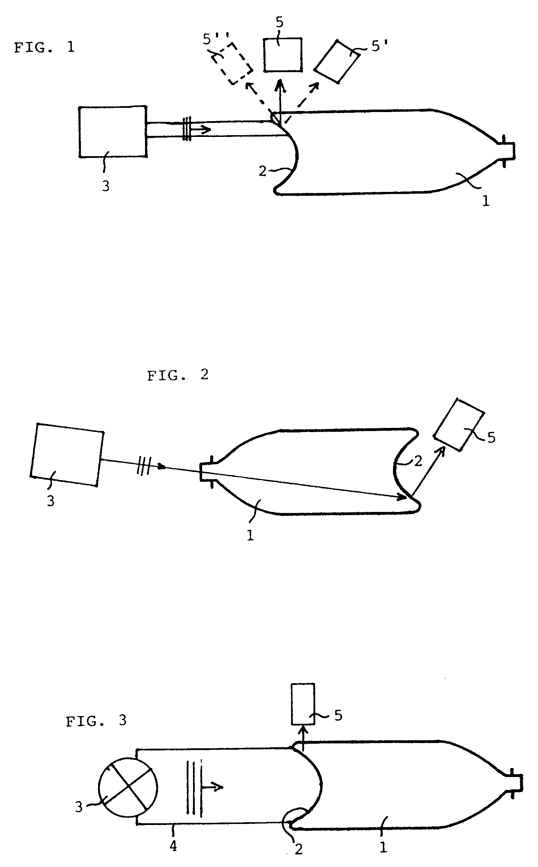

Gemäss der in Figur 1 grob schematisch dargestellten ersten Anordnung wird ein Abschnitt des Flaschenbodens 2 nahe der Bodenlinie (Linie, auf der die Flasche auf einer ebenen Unterlage steht) von einer Lichtquelle 3, z.B. von einer Laser-Lichtquelle oder einer nicht kohärenten fokussierten Lichtquelle, beleuchtet. Vorzugsweise ist dabei der beleuchtete Abschnitt von der Bodenlinie beabstandet, wobei dieser Abstand z.B. 1-2 mm betragen kann. Der beleuchtete Abschnitt reicht in der Regel so weit gegen die Mitte des Flaschenbodens, dass die radial und auch die azimutal verlaufenden Risse im Flaschenboden vom Licht beaufschlagt werden. In der gezeigten Anordnung wird nun das von dem beleuchteten rissigen Kunststoff ausgehende Streulicht mittels eines Sensors 5 gemessen. Das zu messende Licht erreicht dabei den Sensor durch die Flaschenwand. Als Sensor 5 kann ein bekanntes lichtempfindliches Element verwendet werden, welches ein elektrisches Signal proportional dem empfangenen Licht abgibt, z.B. eine Fotodiode oder ein Fototransistor. In der gezeigten Anordnung ist der Sensor 5 ungefähr rechtwinklig zum einfallenden Lichtstrahl angeordnet. Auch andere Winkel für den Sensor können vorgesehen sein, wie in der Figur 1 mit den Sensoren 5' und 5'' angedeutet ist. Die Beleuchtung kann z.B. mittels eines Halbleiterlasers in sichtbarem Wellenlängenbereich oder unsichtbaren Wellenlängenbereich erfolgen, z.B. mit einem Halbleiter-Laser der Wellenlänge 670 nm mit unpolarisiertem, kollimiertem Strahl. Die Beleuchtung kann ebenso von einer nichtkohärenten aber fokussierten bzw. parallelisierten Lichtquelle stammen. Der auf die Flasche auftretende Strahl kann z.B. einen Durchmesser von ca. 5 mm haben. Der beleuchtete Abschnitt kann sich aber auch weiter gegen die Mitte des Flaschenbodens hin erstrecken oder den gesamten Flaschenboden umfassen. Auch eine kreissektorförmige oder kreisringförmige Ausleuchtung des Flaschenbodens ist möglich. Bevorzugt wird bei dieser Anordnung aber jedenfalls, dass die Beleuchtung nicht über die Bodenlinie hinaus erfolgt, damit der Sensor 5 im wesentlichen nur vom Streulicht getroffen wird, und nicht auch von reflektiertem Licht, womit die Empfindlichkeit für stress cracks reduziert würde.

Figur 2 zeigt eine andere Anordnung ebenfalls in grob schemahafter Form, wobei gleiche Bezugszeichen wie in Figur 1 gleiche Elemente bezeichnen. Bei der Ausführungsform von Figur 2 strahlt die Lichtquelle 3 durch den Flaschenhals auf die Risszone des Bodens 2. Der Sensor 5 ist auch hier so angeordnet, dass er im wesentlichen nur das Streulicht empfängt.

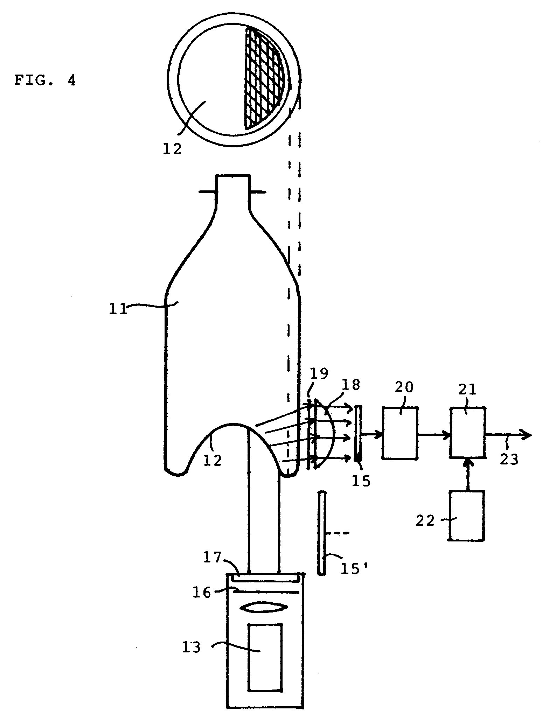

Eine ähnliche Anordnung wie in Figur 1 ist in Figur 3 gezeigt. Hier ist die Lichtquelle 3 eine Glühlampe. Mittels eines Rohres 4 wird dafür gesorgt, dass das Licht als Scheibe den Flaschenboden und insbesondere die Risszone beleuchtet. Auch hier ist der Sensor 5 in einem Winkel, gezeigt ist ein 90° Winkel, zur Einfallsrichtung des Lichtes angeordnet.

Figur 4 zeigt eine Anordnung ähnlich derjenigen von Figur 1, wobei eine Laserlichtquelle 13 vorgesehen ist, welche mittels einer Blende und durch ein Abdeckglas 17 hindurch einen Abschnitt des Flaschenbodens beleuchtet. Der beleuchtete Flaschenbodenabschnitt kann dabei so geformt sein, wie dies oberhalb der Flasche 11 als Draufsicht auf deren Boden dargestellt ist. Das von der Risszone gestreute Licht tritt durch die Flaschenseitenwand hindurch und wird allenfalls über ein Filter 19 und eine Linse 18 möglichst vollumfänglich auf den Fotosensor 15 geleitet. Anstelle des dargestellten kleinflächigen Fotosensors 15, der mittels der Optik 18 möglichst alles Streulicht aufnimmt, kann auch der in der Zeichnung zusätzlich dargestellte grossflächige Fotosensor 15' verwendet werden, welcher der Optik 18 in diesem Fall nicht bedarf. Das vom Fotosensor 15 abgegebene Signal kann durch ein Filter 20 gefiltert werden, um Fremdlichtanteile aus dem elektrischen Signal auszufiltern. Es ist auch ohne weiteres möglich, die Lichtquelle 13 zu modulieren und nur das entsprechend modulierte elektrische Signal empfängerseitig auszuwerten. Nach dem Filter und allenfalls auch Verstärker 20 wird das Signal im gezeigten Beispiel auf einen Analog-Digitalwandler 21 gegeben, und über eine Leitung 23 einer nicht weiter dargestellten Auswerteschaltung zugeführt. Es kann ferner ein Schwellwertgeber 22 vorgesehen sein, welcher bereits beim Analog-Digitalwandler 21 einen Schwellwert bewirkt, so dass nur dann Signale an die Auswerteschaltung weitergegeben werden, wenn der Streulichtanteil einen gewissen Wert übersteigt. Die Auswertung des Streulichtes bzw. des dadurch hervorgerufenen elektrischen Signals ist grundsätzlich einfach, da die Korrelation zwischen stress cracks und der empfangenen Menge Streulicht recht gut ist. Das heisst, je mehr Streulicht empfangen wird, um so mehr und tiefere stress cracks sind vorhanden. Es kann also bereits genügen, mit dem einfachen Schwellwertgeber 22 einen Schwellwert vorzugeben, bei dessen Ueberschreitung die geprüfte Flasche als schlecht bzw. auszuscheiden erkannt wird. In diesem Fall kann direkt das Ausgangssignal des Analog-Digitalwandlers auf der Leitung 23 zur Entscheidung verwendet werden, ob die Flasche 11, die sich in der Regel auf einer nicht dargestellten Förderanlage befindet, aus dem Förderweg ausgestossen werden soll. Der Empfängersensor wird jeweils in dem Moment abgefragt, wenn sich die Flasche genau in richtiger Position über der Lichtquelle befindet. Damit werden Reflexionen vom Bodenringbereich und dem Dom vermieden. Die Förderung der Flaschen 11 auf einer industriellen Förderanlage erfolgt mit hoher Geschwindigkeit, z.B. mit ungefähr 600 Flaschen/Minute. Es hat sich gezeigt, dass die Beaufschlagung der Flasche mit Licht und die Auswertung des Streulichtes bei der zur Verfügung stehenden kurzen Zeit ohne weiteres möglich ist. Wie bereits erwähnt, kann anstelle des dargestellten Abschnittes auch ein wesentlich grösserer Abschnitt des Bodens beleuchtet werden. Es ist auch durchaus möglich, mehr als einen Sensor 15 vorzusehen, dies insbesondere, wenn ein grösserer Bodenabschnitt beleuchtet wird, damit möglichst Streulicht von der gesamten Risszone empfangen werden kann. Dadurch wird die Erkennung wesentlicher Risse erhöht. Anstelle der Anordnung mehrerer Sensoren, welche die gesamte Risszone abdecken, kann z.B. auch eine Drehung der Flasche vorgenommen werden, damit die gesamte Risszone vom Licht beaufschlagt wird.

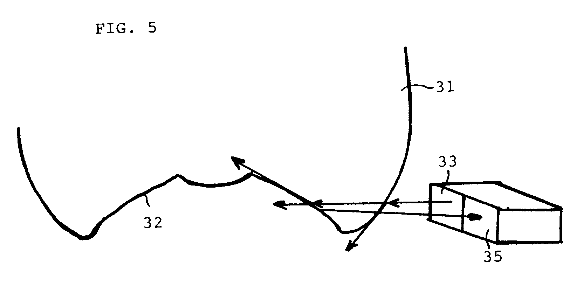

Figur 5 zeigt eine andere Ausführungsform der Erfindung. Dabei wird von einer Lichtquelle 33, welche in diesem Fall vorzugsweise eine Infrarot-Lichtquelle ist, Licht durch die Flaschenwand 31 hindurch auf die Risszone 32 des Bodens hin gerichtet. Durch einen Lichtempfänger 35, welcher nahe bei der Lichtquelle 33 angeordnet ist, wird das an der Risszone reflektierte Licht empfangen. Auch bei dieser Anordnung hat sich gezeigt, dass das Ausgangssignal des Lichtempfängers 35 proportional zur Menge und Tiefe der stress cracks ist. Vorteilhaft an dieser Ausführungsform ist insbesondere, dass keine Installation am Flaschenboden benötigt wird. Auch bei dieser Ausführungsform kann an mehreren Stellen gemessen werden (zeitgleich oder nacheinander) oder die Flasche kann gedreht werden, um die ganze Risszone zu prüfen.

## Patentansprüche

1. Verfahren zum Ausscheiden von Mehrwegflaschen, insbesondere Kunststoff-Mehrwegflaschen aus dem Mehrweg-Umlauf, dadurch gekennzeichnet, dass Licht auf mindestens einen Abschnitt des Flaschenbodens jeweils einer Flasche gerichtet wird und dass vom Flaschenbodenabschnitt zurückgeworfenes Licht von einem lichtempfindlichen Empfänger aufgenommen und in eine dem empfangenen Licht entsprechendes elektrisches Signal umgesetzt wird, welches Signal ausgewertet wird, um die Flasche aus dem Mehrweg-Umlauf auszuscheiden oder in diesem zu belassen.

2. Verfahren nach Anspruch 1, dadurch gekennzeichnet, dass der Empfänger in einem Winkel zur Lichteinfallsrichtung angeordnet ist.

3. Verfahren nach Anspruch 2, dadurch gekennzeichnet, dass der Empfänger in einem Winkel von ca. 90° zur Lichteinfallsrichtung angeordnet ist.

4. Verfahren nach Anspruch 1, dadurch gekennzeichnet, dass der Empfänger im wesentlichen neben der das Licht aussendenden Quelle angeordnet ist.

5. Verfahren nach einem der Ansprüche 1 bis 4, dadurch gekennzeichnet, dass im wesentlichen der ganze Flaschenboden vom Licht beaufschlagt wird.

6. Verfahren nach einem der Ansprüche 1 bis 4, dadurch gekennzeichnet, dass im wesentlichen die Hälfte des Flaschenbodens mit Licht beaufschlagt wird.

7. Verfahren nach einem der Ansprüche 1 bis 4, dadurch gekennzeichnet, dass im wesentlichen ein kreisringförmiger Abschnitt vom Licht beaufschlagt wird.

8. Verfahren nach einem der Ansprüche 1 bis 7, dadurch gekennzeichnet, dass der lichtbeaufschlagte Flaschenbodenabschnitt von der Bodenlinie der Flasche beabstandet ist.

9. Verfahren nach einem der Ansprüche 1 bis 8, dadurch gekennzeichnet, dass sichtbares Licht verwendet wird.

10. Verfahren nach einem der Ansprüche 1 bis 8, dadurch gekennzeichnet, dass Licht im Infrarotbereich verwendet wird.

11. Vorrichtung zur Durchführung des Verfahrens nach einem der Ansprüche 1 bis 10, gekennzeichnet durch eine Flaschenfördereinrichtung, eine Lichtquelle und einen Lichtempfänger, sowie eine auf das elektrische Ausgangssignal des Lichtempfängers ansprechende Auswerteinrichtung.

12. Vorrichtung nach Anspruch 11, dadurch gekennzeichnet, dass die Auswerteinrichtung ein an der Förderstrecke der Fördereinrichtung angeordnetes Auswertelement oder Ausleitelement steuert.
